# EUROPEAN PATENT APPLICATION

(11) **EP 0 984 218 A1**
(43) Date of publication of application: **08.03.2000**
(21) Application number: 99306619.0
(22) Date of filing: 20.08.1999
(51) Int. Cl.: F16M 7/00

(54) **Improvements in and relating to slotted shims**

(30) Priority: 03.09.1998 GB 9819096
(71) Applicant: Rayhome Limited, Bury, BL8 1PY (GB)
(72) Inventor: Brown, Peter James, Bury BL8 1PY (GB)
(74) Representative: Brandon, Paul Laurence

(57) **Abstract**

The present invention relates to slotted shims (38) for machinery for spacing apart a machine base (114) and a support for the machine (116), the shims (38) being adapted to receive in their slots (40, 42), machine-securing bolts (122) and the like, extending between the base (114) and the support (116). The present invention provides a multiple slot shim (38).

## Description

### Field of the Invention

The invention relates to shims for machinery, more specifically though not necessarily exclusively to slotted shims for spacing apart a machine base and a support for the machine, the shims being adapted to receive in their slots, machine-securing bolts and the like, extending between the base and the support. The invention also relates to corresponding methods of use of shims.

### Background of the Invention

Machines, for example motors, pumps, turbines, punch presses and compressors are commonly mounted on supports by releasably securing the bases of the machines to the supports by bolts, studs and other rod like connectors, having elongate shafts which extend between the bases of the machinery and the supports. In many cases, the machine comprises a bearing housing assembly mounted upon a support, generally a floor. The approximate alignment or levelling of the machine or bearing housing is accomplished by appropriate positioning or placement of its support. Precise alignment is then obtained by inserting one or more shims, for example, a RAYSHIM (trade mark) available from Rayhome Limited, Bolholt Works, Walshaw Road, Bury, BL8 1PY, Great Britain, between the machine base or bearing housing and its support, adjusting just the spacing between them, resulting in levelling the machine.

In order to preserve an alignment obtained by shimming and to minimise unwanted movement, it is desirable that a shim or shims support or cover a maximum or proportion of the supported surface of the machine or bearing housing assembly base. When a bolt, for example, extends through such a machine base or bearing housing assembly to connect the machine or bearing housing assembly to its support, maximum shim support is provided by inserting shims around the bolt. Single slotted shims are used for insertion between a machine base and a support without the need to remove one from the other, while minimising the number of shims and the labour required.

Shims may be custom-made for an application, by hand cutting pieces from commercially available shim stock of pre-determined thicknesses. However, hand cutting can result in the formation of burrs that are hazardous to the user. Hand cut shims may be relatively expensive and this is also a waste of the shim stock.

Shims which are pre-cut in standard shim and slot sizes are available commercially. An example of such a single slot shim is shown in US granted patent, number 4,809,821. However, a problem with the standard single slot shim is that if the support is not level, it is difficult to achieve accurate alignment of the machine or bearing housing. It is desirable to provide a load bearing area on the shim covering the whole base of the unit to be supported to achieve mechanical stability. Using two single slot shims is technically not suitable, as it is necessary to support the whole of the foot of the machine or bearing assembly.

It is an object of the present invention to overcome or obviate at least one of the problems, whether referred to above or not, encountered with the prior art.

### Summary of the Invention

According to the present invention in a first aspect, there is provided a multiple slot shim.

The multiple slot shim is designed to be inserted between a machine base or bearing housing assembly and its support to level machinery and standard bearing housing assemblies, to achieve accurate alignment of the machine or standard bearing housing assembly with its support, to achieve mechanical stability. The multiple slot shim may accommodate two or more bolt-means simultaneously in its slots, when in use.

Suitably, the multiple slot shim comprises a body and a plurality of bolt-means receiving slots. Such a design provides a multi-purpose shim which may be used to shim a variety of machine sizes and bearing housing assemblies.

Suitably, each bolt-means receiving slot comprises an opening in the shim, extending from the body of the shim to a front edge at the perimeter of the shim.

Suitably, each bolt-means receiving slot is defined by a pair of adjacent legs integral with the body of the shim and extending from the body to the front edge at the perimeter of the multiple slot shim. Suitably, the multiple slot shim comprises at least three leg portions integral with the body of the shim and extending forwardly therefrom to the front edge of the perimeter of the multiple slot shim. The at least three leg portions define in between them at least two bolt-means receiving slots extending rearwardly from the front edge of the multiple slot shim. Preferably, the multiple slot shim comprises two bolt-means receiving slots defined by three leg portions integral with the body. Preferably, of the three legs, the middle leg is widest.

The design of the multiple slot shim will be dictated by the apparatus that it is designed to shim. In the case of a standard bearing housing assembly, there are two bolts which extend between the bearing housing and the support. Therefore, a double slot shim would be used, with slots the correct distance apart to fit the standard bearing housing assembly.

Suitably, the multiple slot shim is made from metal, preferably brass or stainless steel. Most preferably high grade stainless steel is used to make the multiple slot shim.

The dimensions of the shim may be any suitable dimensions for a particular application.

Suitably, the slot width is at least 16mm, preferably at least 18mm, more preferably at least 20mm and most preferably at least 22mm. Suitably, the slot width is less than 40mm, preferably less than 36mm, more preferably less than 34mm and most preferably less than 32mm.

Suitably the slot depth is at least 45mm, preferably at least 48mm, more preferably at least 50mm and most preferably at least 52mm. Suitably the slot depth is less than 100mm, preferably less than 95mm, more preferably less than 92mm and most preferably less than 89mm.

In respect of a two slot shim, the distance between the centres of adjacent slots is suitably at least 150mm, preferably at least 155mm, more preferably at least 160mm and most preferably at least 165mm. In respect of a two slot shim the distance between the centres of adjacent slots is suitably less than 350mm, preferably less than 320mm, more preferably less than 300mm and most preferably less than 290mm.

In respect of the two slot shim, the shim depth is suitably at least 70mm, preferably at least 74mm, more preferably at least 76mm and most preferably at least 79mm. In respect of a two slot shim, the shim depth is suitably less than 135mm, preferably less than 130mm, more preferably less than 126mm and most preferably less than 122mm.

In respect of a two slot shim, the width of the shim is suitably at least 200mm, preferably at least 220mm, more preferably 225mm, and most preferably at least 230mm. In the case of a two slot shim, the width of a shim is suitably less than 370mm, preferably less than 368mm, more preferably less than 364mm and most preferably less than 359mm.

In respect of a two slot shim, the width of each outer leg is suitably at least 10mm, preferably at least 13mm, more preferably at least 16mm and most preferably at least 20mm. In respect of a two slot shim, the width of each outer leg is suitably less than 30mm, preferably less than 28mm, more preferably less than 24mm and most preferably less than 22mm.

In the case of a two slot shim, the width of the centre leg is suitably at least 130mm, preferably at least 135mm, more preferably at least 140mm and most preferably at least 145mm. In the case of the two slot shim, the width of the centre leg is suitably less than 270mm, preferably less than 265mm, or preferably less than 262mm and most preferably less than 260mm.

Suitably, the multiple slot shim is planar. Suitably, the multiple slot shim is of uniform thickness throughout its length. Suitably, the multiple slot shim is machine made. Preferably, edges of the multiple slot shim are smoothed.

Suitably, a front edge on a leg of the multiple slot shim is inclined inwardly towards the bolt-means receiving slot defined between adjacent legs. Suitably, the inclined edge of the leg is inclined at an angle of about 60° to the front edge provided by the perimeter of the shim. The inclined edges of the leg portions may cause the multiple slot shim, on insertion of the multiple slot shim between the base of the machine and the support for the machine, to move into a position of alignment of the slot and bolt-means for receiving the bolt-means into the slot.

Preferably, both legs defining a bolt-means receiving slot are inclined at their front edges.

Suitably, the body of the multiple slot shim further comprises a gripping portion integral with the body.

Suitably, the gripping portion comprises a protuberance extending from the opposite side of the body to the bolt-means receiving slot. Alternatively, the gripping portion comprises a protuberance extending from a side of the multiple slot shim.

Preferably, the gripping portion comprises a shoulder on the body of the multiple slot shim. Alternatively, the gripping portion comprises a shoulder on an outer leg of the multiple slot shim.

Preferably, the gripping portion comprises a gripping tab integral with the shoulder.

Suitably, the multiple slot shim may be a solid shim. Alternatively, the multiple slot shim may be provided as a laminated shim. A laminated shim comprises a shim having a plurality of layers, which can be peeled off so that the shim may be provided in a required thickness.

Suitably, the bolt-means comprises any means for extending between the machine or bearing housing and the support. Preferably, the bolt-means comprises a bolt, screw or stud preferably having an elongated shaft capable of extending between the machine or bearing housing and the support.

According to the present invention in a second aspect, there is provided a method of adjusting the spacing between the base of a machine and a support for the machine, which machine and support are secured together by a bolt-means extending between the machine and the support, said method comprising the steps of:
a) providing a multiple slot shim according to the first aspect of the invention; and
b) inserting said multiple slot shim between the machine base and the support for reception of a bolt-means in the bolt-means receiving slot.

Suitably, the method comprises the additional step of allowing said machine base to settle on the multiple slot shim (supported by a leg and body portion).

### Brief Description of the Drawings

The invention will now be described, by way of example only, with reference to the drawings that follow; in which:
Figure 1 is a plan view of a first embodiment of a shim in accordance with the present invention;
Figure 2 is a plan view of a second embodiment of a shim according to the present invention;
Figure 3 is a plan view of a third embodiment of a shim in accordance with the present invention;
Figure 4 is a plan view of a fourth embodiment of a shim according to the present invention;
Figure 5 is a perspective view of part of a support and a standard bearing housing assembly, showing the shim illustrated in Figure 2 inserted therebetween.

### Description of the Preferred Embodiments

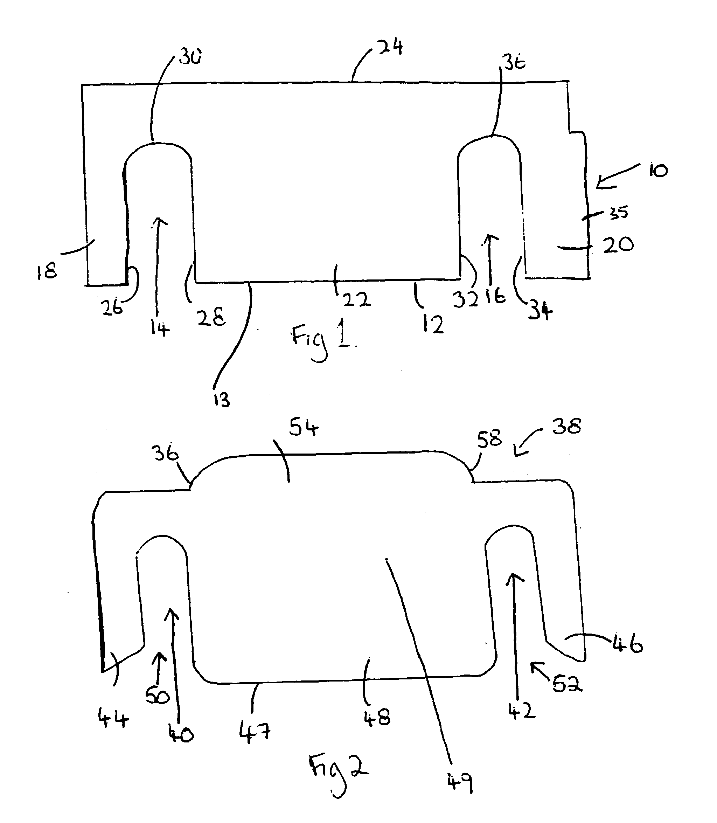

Referring to Figure 1 of the drawings, there is shown a double slot shim 10, comprising a generally rectangular body 12 having a front edge 13 at the perimeter of the shim and two elongate U-shaped slots 14, 16 therein, the slots 14, 16 each being adapted in use to fit about a bolt or the like which passes between a machine and its support.

The slots 14, 16 in the rectangular body 12, leave two outer legs 18, 20 which extend from the body 12 and a larger, inner leg 22. The outer legs 18, 20 are adapted to hold the double slot shim 10 in position about a pair of bolts. The inner leg 22 provides the main weight bearing portion of the shim 10 and also holds the shim 10 in position, in use. The body 12 of the shim 10, near the top edge 24 of the shim 10 is used to insert the shim 10 into position in use.

The outer legs 18, 20 and the inner leg 22 define between them the two slots 14, 16. The slot 14 is defined by a pair of longitudinally extending, parallel, spaced apart inner side edges 26, 28 of the legs 18 and 22, which edges 26, 28 are integrally joined together by a substantially semi-circular concave edge 30 common to the leg portions 18 and 22. The slot 14 extends rewardly from the front edge 13 of the shim to the distal point of the concave edge 30.

The slot 16 is defined by a pair of longitudinally extending, parallel, spaced apart inner side edges 32, 34 of the legs 22 and 20, which edges 32, 34 are integrally joined together by a substantially semi-circular concave edge 36 common to the leg portions 22 and 20, as for slot 14. The slot 16 extends rewardly from the front edge 13 of the shim to the distal point of the concave edge 30.

The shim 10 comprises a tab 35 which protrudes from a side of the shim 10 at outer leg 20.

Referring to Figure 2 of the drawings, there is shown a further double slot shim 38 which is similar to the double slot shim 10 shown in Figure 1, but with some modifications. The double slot shim 38 has two bolt-means receiving slots 40, 42 defined by outer legs 44 and 46 and inner leg 48 within a body portion 49 as in the double slot shim 10 shown in Figure 1. The shim comprises a front edge 47 at the perimeter of the shim. At the entrances 50, 52 to the slots 40, 42, the legs 44, 46 and 48 are inclined and curved. The angle of inclination is suitably about 60° to the front edge of the shim.

The double slot shim 38 further has a gripping tab 54 which is centrally disposed on the body 49 of the shim 38, having curved shoulder portions 56 and 58.

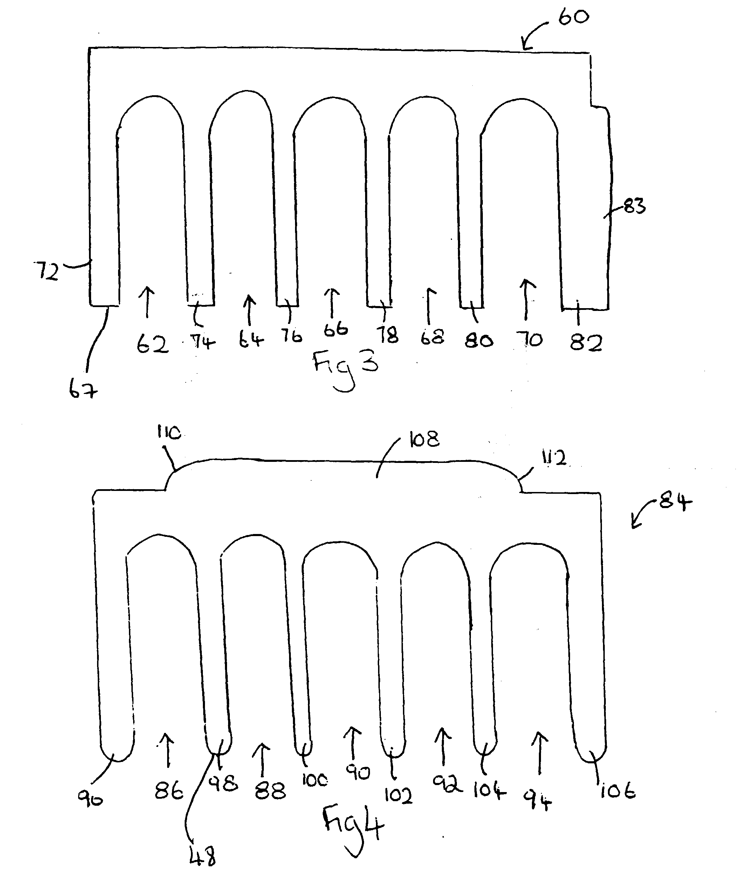

Referring to Figure 3 of the drawings, there is shown a further multiple slot shim 60 which is similar to the double slot shim 10 shown in Figure 1. The multiple slot shim 60 has a front edge 67 at the perimeter of the shim and further comprises five bolt-means receiving slots 62, 64, 66, 68 and 70, defined by six legs 72, 74, 76, 78, 80 and 82. The multiple slot shim 60 has a gripping tab 83 protruding from a side of the shim 60 at outer leg 82.

Figure 4 shows a further multiple slot shim 84 which has the same features as the double slot shim 38 shown in Figure 2, except that there are five bolt-means receiving slots 86, 88, 90, 92 and 94, defined by six legs 96, 98, 100, 102, 104 and 106. Each of the legs 96, 98, 100, 102, 104 and 106 are curved at their ends. The multiple slot shim 84 has a gripping tab 108, similar to the gripping tab 54 on the double slot shim 38 shown in Figure 2, and having shoulder portions 110 and 112.

The shims 10, 38, 60 and 84 may be made in a series of sizes, having slots, 14, 16, 40, 42, 62, 64, 66, 68, 70, 86, 88, 90, 92 and 94 corresponding to the sizes of bolt-means, such as bolts, studs and the like, commonly used for mounting machinery. The slots are made slightly wider than the diameter of the bolt-means to be received, eg, 1 mm wider than the prescribed bolt-means size. Each shim 10, 38, 60 and 84 is of uniform thickness. The shims 10, 38, 60 and 84 may be made of high grade stainless steel or brass and are made in a variety of thicknesses, in a preferred range from 0.05 mm to 2.00 mm.

The shims 10, 38, 60 and 84 may also be provided as laminated shims, available in a variety of sizes in both brass and stainless steel. The shims 10, 38, 60 and 84 may be readily fabricated by conventional methods, such as die stamping from a strip or sheet of metal of a predetermined thickness. Edges of the shims 10, 38, 60 and 84 may be smoothed by tumbling with abrasive, or by pinching between two rollers. This smoothing produces shims with burr free edges. Each laminated shim may have a thickness of 1.00 mm divided into up to twelve layers, for example. To achieve the required thickness, layers of the laminated shim are peeled off to obtain the correct thickness.

The dimensions of the body portion and leg portions of each shim 10, 38, 60 and 84 are selected so that preferably the shim is received between a machine base and its support without protruding from the machine.

The shoulder 56, 58, 110 and 112 and gripping tab 54, 108 portions of the shims 38 and 84 are employed for manual gripping and alignment purposes, allowing a user to rapidly and accurately install a shim. Consequently, the shoulder and tab portions will protrude when the shim 38 and 84 is in place and ordinarily will not support the machinery.

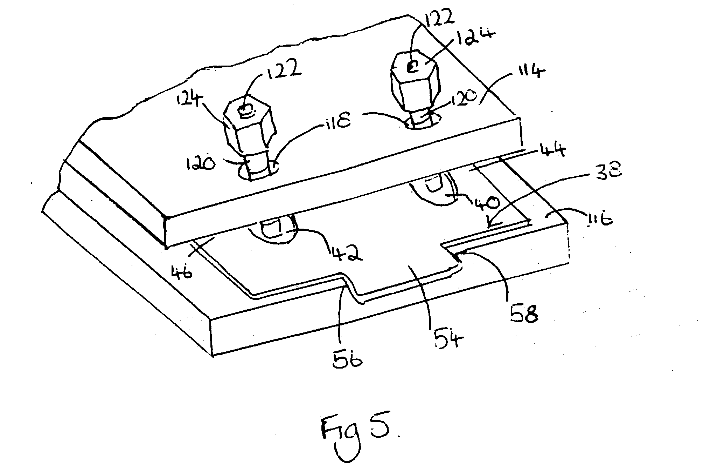

Referring to Figure 5 of the drawings, a shim 38 may be inserted manually between a machine base 114 and a machine support or mount 116 at one end of the base 114, for alignment purposes. A conventional base 114 may be generally rectangular and have a bolt hole 118 extending through it at each corner, for receiving the shank 120 of a bolt or stud 122. The bolt or stud 122 may be fixedly secured or otherwise connected to the support 116 and the base 114 is adjustably connected to the support 114 by means of a nut 124 in a threaded engagement with a threaded outer end of the bolt or stud 122.

In order to insert a shim 38 it is necessary to make room for the shim by separating the base 114 from the support 116 in some manner, such as by prying the two apart. The shim 38 is then grasped by its tab 54 and/or its shoulder portions 56, 58 and is inserted generally in its longitudinal direction with its slot entrances 80, 52 inserted first and its slots 40, 42 in approximate alignment with the shank 120.

When contact is made between one of the inclined edges of the legs 44, 46 and 48 and the shank 120, the shim is caused to move into a position of alignment of the slots 40, 42 with the shank 120.

Depending upon the structure of the base 114, the shim 38 may be inserted until the bolt shank 120 abuts on the top of the slots 40, 42. When insertion is complete, the body portion 49 and the legs 44, 46 and 48 are disposed between the base 114 and the support 116 and the tab 54 and shoulder portions 56, 58 protrude from the base 114. When the base 114 is allowed to settle on the shim, it is supported by the body portion 49 and the legs 44, 46 and 48 of the shim and is spaced apart from the support by a distance equal to the thickness of the shim. The nut 124 may be tightened to secure the machine to the support in a desired alignment of the shim.

Using a double or multiple slot shim allows more than one bolt to be shimmed simultaneously. Generally, machines have a rectangular base having a pair of bolts at each end. A double slot shim allows one end of a machine to be shimmed in one action, to level the machine. This is more efficient than using separate single slot shims and also provides support over the whole of the base of the machine between the bolts.

The self-alignment feature of the shim 38 provided by the inclined entrances 50, 52 to the slots 40, 42 enables insertion of the shim rapidly and reliably, without substantial damage to the shim due to the application of force if the shim is inserted out of alignment initially. The tab 54 and shoulder 56, 58 portions cooperate in increasing the rigidity and strength of the shim, and provide a better grip for the user whilst keeping the amount of material protruding from the machinery to a minimum.

Although multiple slot shims in accordance with the present invention can be manufactured with any suitable dimensions, Table 1 below sets out the dimensions of five two slot shims which can be used with machines complying with ISO/FDIS No. 113 : 1998(E).

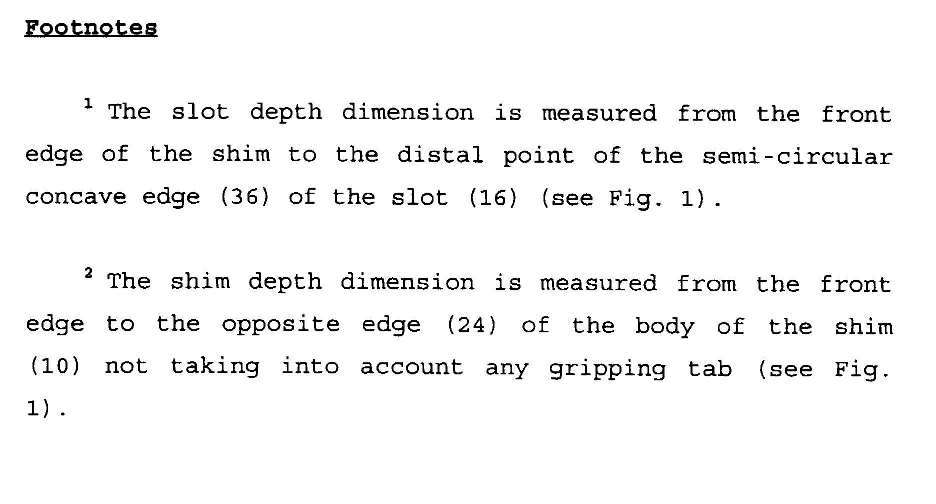

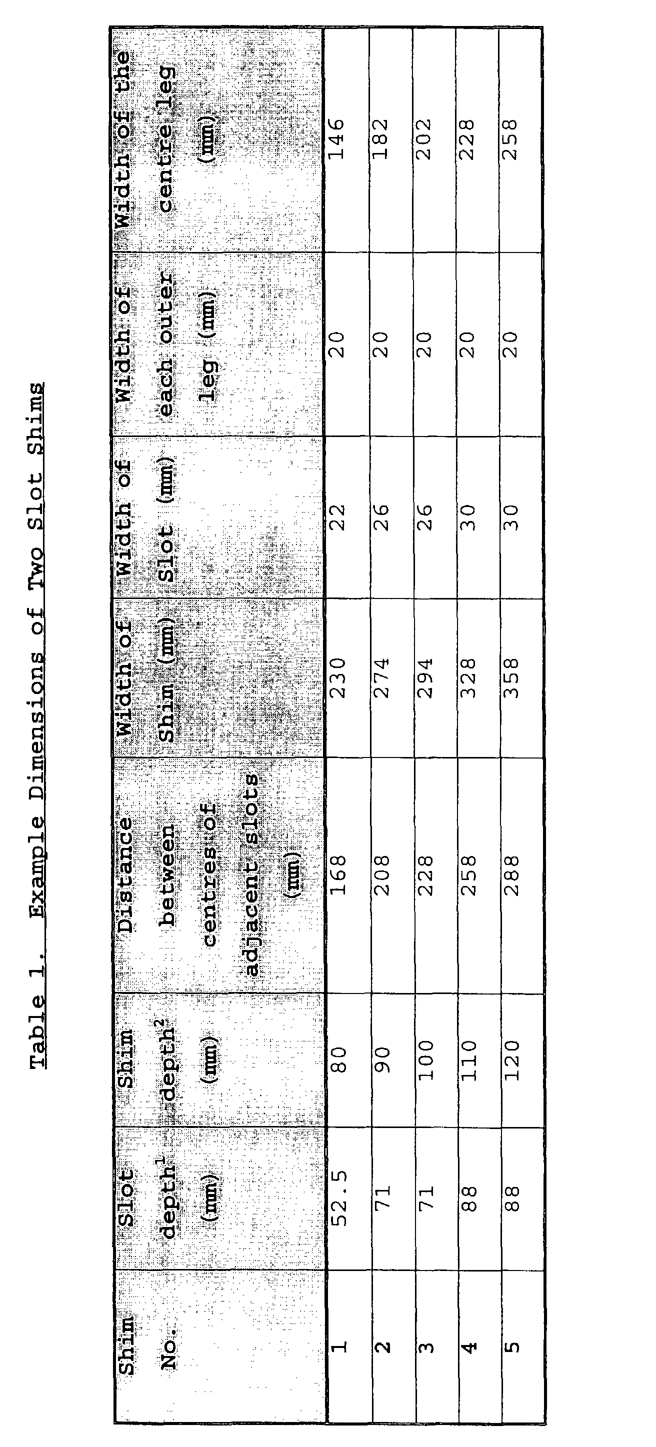

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multiple slot shim (10).

2. A multiple slot shim in accordance with Claim 1, wherein said shim (10) comprises a body (12) and a plurality of bolt-means receiving slots (14, 16).

3. A multiple slot shim in accordance with Claim 2, wherein each bolt-means receiving slot (14, 16) comprises an opening in the shim (10).

4. A multiple slot shim in accordance with Claim 3, wherein said opening extends from the body (12) of the shim to a front edge at the perimeter of said shim (10).

5. A multiple shot in accordance with any one of Claims 2-4, wherein each of said bolt-means receiving slots (14, 16) is defined by a pair of adjacent legs (18, 20, 22) integral with said body (12) of said shim (10) and extending from said body (12) to said front edge at the perimeter of said shim (10).

6. A multiple slot shim in accordance with Claim 5, wherein said shim (10) comprises at least three leg portions (18, 20, 22) integral with said body (12) of said shim (10) and extending from said body (12) to said front edge of the perimeter of said shim (10).

7. A multiple slot shim in accordance with Claim 6, wherein said at least three leg portions (18, 20, 22) define in between them at least two bolt-means receiving slots (14, 16), extending rearwardly from said front edge of said shim (10).

8. A multiple slot shim in accordance with Claim 6 or Claim 7, wherein of said three legs (18, 20, 22), the middle leg (22) is widest.

9. A multiple slot shim in accordance with any one of Claims 5-8, wherein a front edge on a leg (44, 46) of said shim (38) is inclined inwardly towards said bolt-means receiving slot (40, 42) defined between adjacent legs (44, 46, 48).

10. A multiple slot shim in accordance with Claim 9, wherein both legs (44, 48) defining a bolt-means receiving slot (40) are inclined at their front edges.

11. A multiple slot shim in accordance with any one of the preceding claims, wherein said body (12, 49) of said shim (10, 38) further comprises a gripping portion (35, 54) integral with said body (12, 49).

12. A multiple slot shim in accordance with Claim 11, wherein said gripping portion (54) comprises a protuberance extending from the opposite side of said body (49) to said bolt-means receiving slot (40, 42).

13. A multiple slot shim in accordance with Claim 11, wherein said gripping portion (35) comprises a protuberance extending from a side of said shim (10).

14. A method of adjusting the spacing between the base of a machine (114) and a support (116) for the machine, which machine (114) and support (116) are secured together by a bolt-means (122) extending between the machine (114) and the support (116), said method comprising the steps of:
(a) providing a multiple slot shim (38) according to anyone of the preceding claims; and
(b) inserting said multiple slot shim (38) between the machine base (114) and the support (116) for reception of a bolt-means (122) in the bolt-means receiving slot (40, 42).

15. A method according to Claim 14, wherein said method further comprises the step of allowing said machine base (114) to settle on said multiple slot shim (38).
